# NEUE EUROPÄISCHE PATENTSCHRIFT

(11) **EP 3 209 164 B2**
(45) Veröffentlichungstag und Bekanntmachung des Hinweises auf die Entscheidung über den Einspruch: **09.02.2022**
(45) Hinweis auf die Patenterteilung: 15.08.2018
(21) Anmeldenummer: 15771620.0
(22) Anmeldetag: 01.10.2015
(51) Int. Cl.: A47B 47/02, B65G 1/02

(54) **LAGERREGAL**
STORAGE RACK
RAYONNAGE DE STOCKAGE

(30) Priorität: 22.10.2014 DE 202014105051 U
(43) Veröffentlichungstag der Anmeldung: 30.08.2017
(73) Patentinhaber: Nedcon B.V., 7005 BJ Doetinchem (NL)
(72) Erfinder: RAUWERDINK, Edwin, NL-7103 EK Winterswijk (NL); ASSINK, Mark, NL-7261 WK Ruurlo (NL); FREDERIKS, Jan Willem, NL-7009 AK Doetinchem (NL)
(74) Vertreter: Christophersen & Partner Partnerschaft mbB Patentanwälte
(86) Internationale Anmeldenummer: PCT/EP2015/072724
(87) Internationale Veröffentlichungsnummer: WO 2016/062518

(56) Entgegenhaltungen:
- DE-A1- 3 021 090
- DE-U1- 20 303 178
- US-B1- 6 173 846

## Beschreibung

Die Erfindung betrifft ein Lagerregal zur Aufnahme quaderförmiger Stückgüter wie z. B. beladener Normpaletten oder Normcontainer, mit vorderen und hinteren vertikalen Stützen, sich über die Regaltiefe erstreckenden Lagergassen, die zur Bereitstellung von Auflagen für die Stückgüter mit mindestens zwei zueinander parallel angeordneten, horizontalen Tragprofilen versehen sind, und Stoppelementen an den den Ein- und Auslagerenden abgewandten Enden der Lagergassen, wobei sich die Stoppelemente in einer Ebene über der Ebene der Auflagen befinden, wobei die Stoppelemente über Verbindungselemente an den hinteren Stützen und/oder Tragprofilen befestigt sind. Ein solches Lagerregal ist häufig die kleineste Einheit in ausgedehnten Großregallagern, wie sie z. B. von Versandunternehmen verwendet werden. Das Ein- und Auslagern der in der Regel quaderförmigen Stückgüter erfolgt von einer Quergasse aus mittels Gabelstaplern oder unter Einsatz spezieller Regalbediengeräte. Die vorzugsweise zu beiden Seiten der Quergasse angeordneten Lagerregale weisen zu der Quergasse hin offene Lagergassen auf, in denen die Waren bzw. Warengebinde angeordnet sind. Konstruktive Bestandteile der Lagerregale sind vertikale Stützen, die durch quer angeordnete Traversen miteinander verbunden sind. Zu jeder Lagergasse gehören zwei horizontale Auflagen, auf denen die Stückgüter absetzbar sind. Diese Auflagen befinden sich üblicherweise an zwei zueinander parallel angeordneten Tragprofilen. Die Tragprofile erstrecken sich entweder in Richtung der Regaltiefe, oder aber die vorderen und hinteren Traversen dienen selbst als Tragprofile. Letzteres ist bei Palettenlagern üblich, wobei sich die jeweilige Palette im Bereich ihres in Einlagerungsrichtung vorderen Randes auf der hinteren, und im Bereich ihres in Einlagerungsrichtung hinteren Randes auf der vorderen Traverse abstützt.

Obgleich die Einlagerung neuer Stückgüter häufig automatisch und mit entsprechender Positioniergenauigkeit erfolgt, ist nicht immer auszuschließen, dass Stückgüter von der Quergasse aus gesehen zu tief eingelagert werden. Ein zu tiefes Einlagern ist im Hinblick auf das spätere Wiederauslagern von Nachteil, wenn das Regalbediengerät das Stückgut nicht an der erwarteten Position, sondern etwas davor aufnimmt. Sehr problematisch ist eine mangelnde Positioniergenauigkeit bei Palettenlagern, in denen die mit Waren beladenen Paletten nur auf vorderen und der hinteren Quertraversen aufliegen, da es dann bei einem zu tiefen Einlagern zu einem unzureichenden Aufliegen der Palette kommen kann bis hin zur Gefahr eines Abstürzens der Palette.

Um so ein zu tiefes Einlagern der Stückgüter zu vermeiden, sind die Lagerregale an den der Quergasse abgewandten Enden mit starr an dem Regal verankerten und stabil ausgebildeten Stoppelementen versehen, die als Anschläge dienen. Die Stoppelemente befinden sich in einer Ebene über der Ebene der Auflagen und beschränken somit die mögliche Einlagertiefe in der Lagergasse. Sie sind so stabil ausgebildet und befestigt, dass ein zu tiefes Einlagern des Stückgutes, bezogen auf die Regaltiefe, praktisch ausgeschlossen ist.

Das Vorhandensein nahezu starrer Stoppelemente führt allerdings dazu, dass es in Fällen eines in Richtung der Regaltiefe deutlich zu heftigen und insbesondere unkontrollierten Einlagerns zu so starken und vor allem ungebremsten Horizontalkräften auf das Lagerregal kommen kann, dass eine Schädigung des Regals und insbesondere seiner tragenden Bauteile nicht ausgeschlossen ist.

Aus der US 6,173,846 B1 sind Stoppelelemente bekannt, die als Winkelelement ausgebildet sind und an ihrem einen Ende eine Öffnung zur Befestigung an einem Tragprofil aufweisen. Das andere Ende der Winkelelemente dient als Stoppelement. Das Dokument US 6,173,846 B1 offenbart ein Lagerregal nach dem Oberbegriff des Anspruchs 1. Ziel der Erfindung ist es, bei einem Lagerregal zur Aufnahme quaderförmiger Stückgüter wie z. B. beladener Normpaletten durch montagetechnisch einfache und preisgünstige Maßnahmen die Gefahr zu mindern, dass es bei einem in Richtung der Regaltiefe zu heftigen Einlagern von Stückgütern zu Schäden am Regal kommen kann. Die Lösung dieser Aufgabe erfolgt durch die Merkmale des Anspruchs 1. Indem sich die Stoppelemente nicht starr verhalten, sondern sie über Dämpfungselemente, die in Längsrichtung der Lagergasse verformbar und nachgiebig ausgebildet sind, mit den Stützen und/oder mit den Tragprofilen des Lagerregals verbunden sind, reduziert sich die Gefahr, dass es in Fällen eines in Richtung der Regaltiefe zu heftigen Einlagerns von Stückgütern durch zu große Stoßkräfte zu Schäden am Regal und an dessen tragenden Bauteilen kommt, etwa zu einem Verformen und damit Schwächen der für die Statik des Regals besonders wichtigen Stützen. Die Dämpfungselemente sind so angeordnet und ausgebildet, dass sie Kräfte, die normalerweise zu einer Schädigung des Regals führen könnten, als Verformung aufnehmen, indem sie gestreckt werden.

Die Verformung der Dämpfungs- bzw. Verbindungselemente ist vorzugsweise nicht reversibel, sondern sie ist plastischer Art. Es kommt also zu einer bleibenden Deformation.

Die so verformten Elemente müssen daher anschließend gegen neue Elemente ausgetauscht werden, die noch über ihre volle Verformbarkeit verfügen.

Vorteilhafte Ausgestaltungen des Lagerregals sind in den Unteransprüchen angegeben.

Von Vorteil für eine preisgünstige Herstellung des Verbindungselements ist bei der Erfindung, dass das Verbindungselement ein Blechformteil ist, an dem einstückig ausgebildet sind
- ein erster Befestigungsbereich zur starren Verbindung mit der Stütze bzw. dem Tragprofil,
- ein zweiter Befestigungsbereich zur starren Verbindung mit dem Stoppelement,
- ein verformbarer Bereich zwischen den beiden Befestigungsbereichen, wobei der verformbare Bereich mindestens einen sich quer oder schräg zur Ein- und Auslagerrichtung erstreckenden Abschnitt umfasst.

Hinsichtlich des ersten Befestigungsbereichs wird vorgeschlagen, dass dieser zu seiner Befestigung an der Stütze des Lagerregals vertikal angeordnet ist. Vorzugsweise ist dieser erste Befestigungsbereich an der Rückseite der hinteren Stütze befestigt.

Hinsichtlich des zweiten Befestigungsbereichs wird mit der Erfindung vorgeschlagen, dass dieser im Wesentlichen horizontal angeordnet, und vorzugsweise an der Ober- oder Unterseite des Stoppelements befestigt ist. Diese Ausgestaltung ermöglicht eine besonders gute und dauerhafte Kraftübertragung zwischen dem nachgiebig verformbaren Verbindungselement und dem vergleichsweise starren Stoppelement. Denn sind diese beiden Teile miteinander verschraubt, werden die in erster Linie horizontalen Stoßkräfte sowohl durch den aufgrund der Verschraubung erzielten Reibschluss übertragen, als auch durch den Formschluss zwischen der Schraube und den zur Hindurchführung der Schraube vorgesehenen Öffnungen im Stoppelement und im Verbindungselement. Dadurch reduziert sich die Gefahr, dass es im Laufe der Zeit durch die Stöße zu einem Ausschlagen der Verbindung zwischen Stoppelement und Verbindungselement kommt.

Bei der Erfindung besteht der zweite Befestigungsbereich aus zwei horizontal nebeneinander angeordneten Befestigungszonen, wobei in der ersten Befestigungszone ein erstes, und in der zweiten Befestigungszone ein zweites, d. h. anderes Stoppelement befestigt ist, nämlich mittels einer Verschraubung oder Verstiftung. Von Vorteil ist hierbei, dass an ein- und demselben Verbindungs- und Dämpfungselement gleich zwei Stoppelemente befestigbar sind, wodurch sich die Anzahl der insgesamt erforderlichen Teile reduzieren lässt. Vorteilhaft an dieser Ausgestaltung ist außerdem, dass es nur zu relativ geringen Wechselwirkungen kommt. Denn zwar sind zwei Stoppelemente an ein- und demselben, gemeinsamen Verbindungselement befestigt, jedoch in unterschiedlichen Befestigungszonen und mit Abstand zueinander. Die benachbarten Stoppelemente können daher bei harten Stößen Relativbewegungen zueinander ohne zu große gegenseitige Beeinflussung ausführen. Dies reduziert die mechanische Beanspruchung der Teile, und verlängert deren Lebensdauer.

Mit einer Ausgestaltung des Verbindungselements wird vorgeschlagen, dass sich der zwischen den beiden Befestigungsbereichen angeordnete, verformbare Bereich aus Biegeabschnitten mit zueinander gegensinnigen Biegeverläufen zusammensetzt. Vorzugsweise ist hierbei ein erster Biegeabschnitt als eine nach unten offene Schale oder Rinne, und ein darauffolgender zweiter Biegeabschnitt als eine nach oben offene Schale oder Rinne geformt. Eine solche Gestaltung ist durch eine einfache Biegeverformung des Blechformteils einfach und kostengünstig herstellbar, und ermöglicht ein gutes Streckverhalten bei starken Stößen auf das Stoppelement, bei zugleich ausgeprägtem Dämpfungsverhalten infolge bleibender Verformung.

Mit dem Ziel einer montagetechnisch günstigen Lösung wird vorgeschlagen, dass der erste Befestigungsbereich mit der hinteren Stütze verschraubt oder verstiftet ist, und dass der sich quer oder schräg zu der Ein- und Auslagerrichtung erstreckende Abschnitt in Verlängerung zu der Verschraubung bzw. Verstiftung mit einer Montageöffnung versehen ist. Die Montageöffnung lässt sich sehr einfach durch Lochstanzen des Blechformteils herstellen und erleichtert die Verschraubung bzw. Verstiftung des Verbindungs- und Dämpfungselements mit der Rückseite des Regals.

Gemäß einer weiteren Ausgestaltung ist an dem Verbindungselement einstückig eine Lasche ausgebildet, deren freies Ende einer vertikal angeordneten Fläche an der hinteren Stütze oder an dem Tragprofil gegenüberliegt. Durch die Lasche kommt es zu einer zusätzlichen Abstützung, wodurch ein vertikales Schwingen oder Vibrieren des Stoppelements unterdrückt wird. Dabei kann das freie Ende der Lasche entweder direkt gegen die vertikal angeordnete Fläche abgestützt sein, oder das freie Ende der Lasche liegt der vertikal angeordneten Fläche mit nur geringem Abstand gegenüber.

Mit einer weiteren Ausgestaltung wird vorgeschlagen, dass die hintere Stütze als ein Profil ausgebildet ist, dass die vertikal angeordnete Fläche eine sich in Profillängsrichtung erstreckende Einsenkung in der Rückseite des Profils ist, und dass das Profil zu beiden Seiten der Einsenkung Flächenbereiche aufweist, gegen die der erste Befestigungsbereich des Verbindungselements befestigt ist.

Mit weiteren Ausgestaltungen wird vorgeschlagen, dass das freie Ende der Lasche unterhalb des Befestigungsbereichs angeordnet ist, und dass die Lasche ein ausgestanzter Abschnitt des Blechformteils ist, aus dem das Verbindungselement besteht.

Weitere Vorteile und Einzelheiten ergeben sich aus der nachfolgenden Beschreibung zweier Ausführungsbeispiele, wobei auf die Zeichnungen Bezug genommen wird. Darin zeigen
- Fig. 1: eine Draufsicht auf eine Regalebene eines Lagerregals für mit Waren beladene Paletten, wobei drei nebeneinander angeordnete Paletten dargestellt sind;
- Fig. 2: eine Seitenansicht auf die Regalebene des Lagerregals;
- Fig. 3: die Einzelheit III der Figur 2, nämlich ein nachgiebig an der Rückseite des Lagerregals befestigtes Stoppelement, in vergrößertem Maßstab;
- Fig. 4: eine Draufsicht auf das Stoppelement und ein Verbindungselement, welches das Stoppelement mit der Rückseite des Lagerregals verbindet;
- Fig. 5: die Gegenstände nach Figur 4 und 5 in perspektivischer Ansicht von schräg oben;
- Fig. 6: in einer zweiten Ausführungsform und in perspektivischer Ansicht von schräg oben zwei Stoppelemente und ein Verbindungselement, welches die Stoppelemente mit der Rückseite einer vertikalen Stütze des Lagerregals verbindet;
- Fig. 7: das Verbindungselement nach Fig. 6 in einer Seitenansicht, und
- Fig. 8: das Verbindungselement nach Fig. 6 in einer Ansicht von unten.

Das im Folgenden beschriebene Lagerregal ist häufig die kleinste Einheit in ausgedehnten Stückgutlagern, wie sie z. B. in Speditionen und in Versandunternehmen verwendet werden. Das Ein- und Auslagern der in der Regel quaderförmigen Stückgüter erfolgt von einer Quergasse aus mittels Gabelstaplern oder unter Einsatz spezieller Regalbediengeräte. Die vorzugsweise zu beiden Seiten der Quergasse angeordneten Lagerregale sind mehrstöckig und weisen zu der Quergasse hin offene Lagergassen auf, in denen die Stückgüter abgesetzt sind.

Den statischen Grundaufbau der Lagerregale bilden im Wesentlichen vertikale vordere Stützen 1, vertikale hintere Stützen 4 sowie horizontal angeordnete, jeweils zwei Stützen 1 bzw. 4 miteinander verbindende Traversen 2, 3. Ferner können zwischen den vorderen und den hinteren Stützen 1 bzw. 4 diagonale Verstärkungsstreben 5 vorhanden sein.

An der Vorderseite des Lagerregals, an der sich zum Ein- und Auslagern der Waren bzw. Stückgüter eine Quergasse für einen in Position vor jedem einzelnen Lagerplatz verfahrbaren Gabelstapler oder für ein automatisch arbeitendes Regalbediengerät befindet, sind jeweils zwei vertikale Stützen 1 durch eine vordere Traverse 2 horizontal verbunden. Ebenso sind jeweils zwei Stützen 4 an der Rückseite des Lagerregals durch eine hintere Traverse 3 horizontal miteinander verbunden. Zur Verbindung der quer angeordneten Traversen 2, 3 mit den Stützen 1, 4 sind die Stützen 1, 4 als Lochprofile gestaltet. Dies erlaubt die Befestigung der Quertraversen 2, 3 und anderer Regalelemente in unterschiedlichen Höhen entsprechend dem Lochmuster der Lochprofile. Die hintere Traverse 3 befindet sich in derselben Höhe wie die vordere Traverse 2.

Der in Richtung der Regaltiefe gemessene Abstand zwischen der vorderen Traverse 2 und der hinteren Traverse 3 ist geringer, als die in Richtung der Regaltiefe gemessene Länge der auf beiden Traversen 2, 3 zugleich aufliegenden Transportpalette P. Die beiden Traversen 2, 3 dienen bei dieser Ausführungsform zugleich als vordere und hintere Tragprofile 10, deren Oberseiten jeweils eine Auflage 11 für das Stückgut bzw. die Transportpalette P bilden. Die Transportpalette P, z. B. eine in ihren Grundmaßen standardisierte Euro-Palette, stützt sich im Bereich ihres in Einlagerrichtung vorderen Randes auf der Auflage 11 des hinteren Tragprofils 10, und im Bereich ihres in Einlagerungsrichtung hinteren Randes auf der Auflage 11 der vorderen Tragprofils 10 ab.

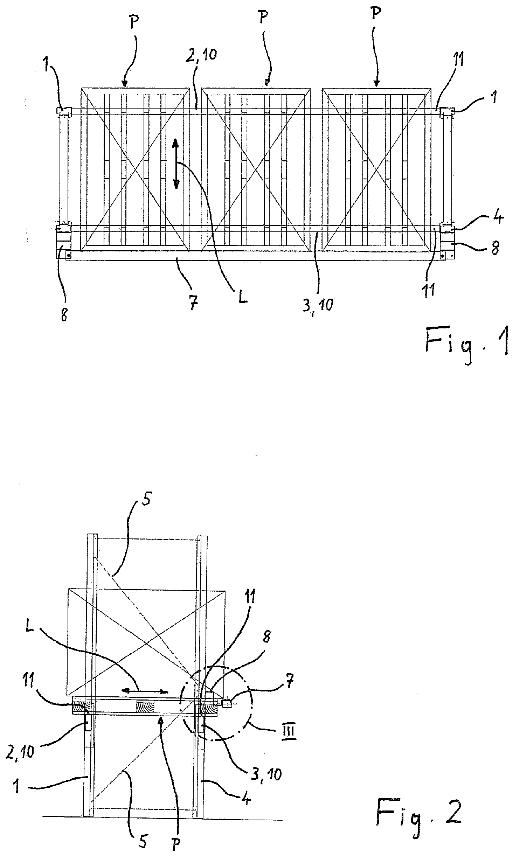

Bestandteile der Lagerregale sind ferner stoßabsorbierend befestigte Stoppelemente 7. Diese sind an den hinteren, also den der Quergasse abgewandten Enden der Lagergassen angeordnet, und sie befinden sich höher als die Ebene der Auflagen 11. Die Stoppelemente 7 sind horizontal nachgiebig angeordnete Profilelemente, die sich horizontal quer zur Lagergasse und damit quer zur Ein- und Auslagerrichtung L erstrecken. Die Stoppelemente 7 können von solcher Länge sein, dass sie sich quer zugleich über zwei oder drei benachbarte Lagergassen erstrecken. Bei Figur 1 erstreckt sich ein Stoppelement 7 über gleich drei Lagergassen.

Die Stoppelemente 7 begrenzen den Einlagerweg nach hinten hin. Sie selbst sind zwar, da als Hohlprofile gestaltet, weitgehend starr, jedoch sind sie gegenüber Stoßbelastungen nachgiebig an dem Lagerregal befestigt. Auf diese Weise kann es in Fällen eines in Richtung der Regaltiefe zu heftigen Einlagerns eines neuen Stückguts zu keinen bleibenden Schäden oder Verformungen an dem Lagerregal und insbesondere an dessen statisch tragenden Teilen kommen.

Für eine nachgiebige Anordnung des als rückwärtiger Anschlag dienenden Stoppelementes 7 ist dieses nicht direkt an den hinteren Stützen 4 oder der hinteren Traverse 3 befestigt, sondern nur mittelbar über Elemente 8, die zugleich Verbindungs- und Dämpfungselemente sind.

Jedes dieser Elemente 8 ist eine in Richtung der Regaltiefe nachgiebig ausgebildete Spange, die aus einem Blechformteil besteht und die einerseits an der Rückseite der hinteren Stütze 4 befestigt ist, und an der andererseits das Stoppelement 7 befestigt ist. Im Falle einer Kollision, also einer zu starken horizontalen Kraft oder eines zu starken Stoßimpulses gegen das Stoppelement 7, vermag sich das nachgiebige Element 8 zu strecken, wodurch Kräfte abgebaut werden, und der auf das Lagerregal ausgeübte Kraftimpuls gedämpft wird. Indem die Stoppelemente 7 nicht starr angeordnet sind, sondern sie über die in Längsrichtung der Lagergasse verformbar und nachgiebig ausgebildeten Elemente 8 mit den Stützen 4 und/oder den Tragprofilen 10 des Lagerregals verbunden sind, reduziert sich die Gefahr, dass es in Fällen eines in Richtung der Regaltiefe zu heftigen Einlagerns von Stückgütern zu Schäden am Regal und an dessen tragenden Bauteilen kommt, und insbesondere zu einem Verformen und damit Schwächen der für die Statik des Regals besonders wichtigen Stützen 1,4.

Die Elemente 8 sind in der Weise angeordnet und ausgebildet, dass sie Kräfte, die normalerweise zu einer Schädigung des Regals führen könnten, als Verformung aufnehmen, indem die Elemente 8 gestreckt werden. Dieses Strecken ist nicht reversibel, sondern ist plastischer Art. Es kommt also zu einer bleibenden Verformung. Wäre hingegen die Verformung des Elements 8 reversibel, also z. B. von federelastischer Art, könnte es zu unerwünschten Rückfedereffekten auf das gerade eingelagerte Stückgut kommen.

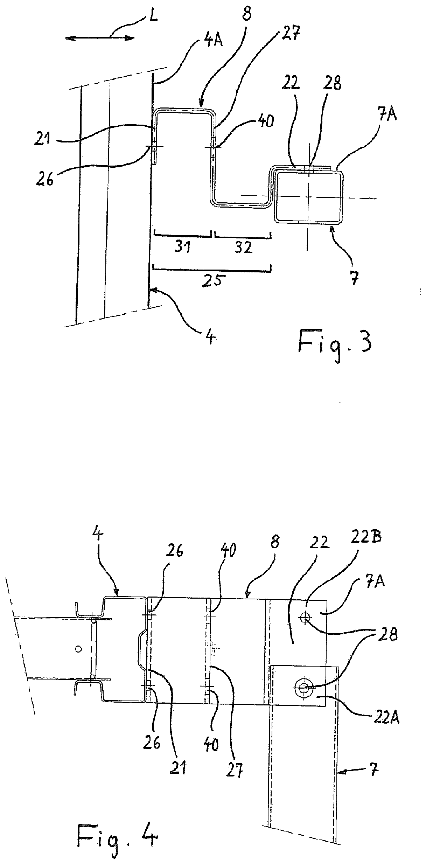

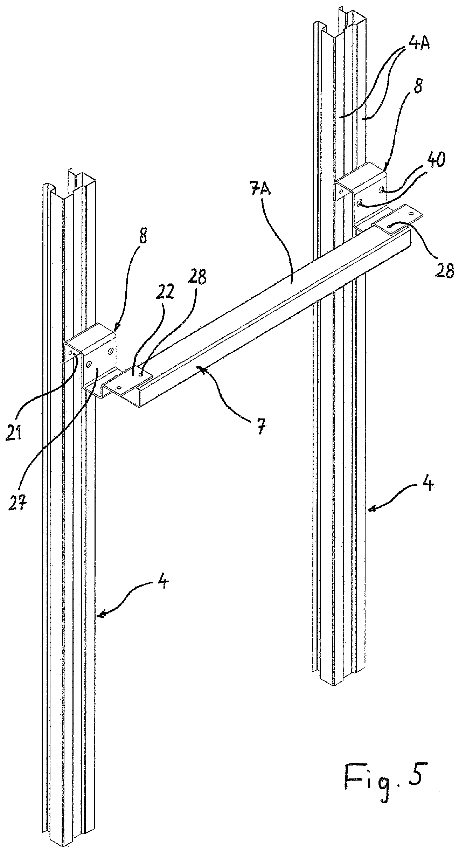

Ein einmal verformtes Element 8 wird gegen ein neues Element 8 ausgetauscht, welches noch über seine volle Verformungsfähigkeit verfügt. Um die mit diesem Austausch verbundenen Kosten gering zu halten, handelt es sich bei den Elementen 8 um preisgünstig herstellbare, einstückige Blechformteile. Diese bestehen zum Beispiel aus einem Stück Stahlblech, welches durch mehrfaches Biegen und gegebenenfalls auch Stanzen die vor allem in Figur 3 und Figur 5 erkennbare Gestalt erhält. Einstückig an diesem Blechformteil ausgebildet sind ein erster Befestigungsbereich 21 zur Verbindung mit der Stütze 4, ein zweiter Befestigungsbereich 22 zur Verbindung mit dem als Profilelement ausgebildeten Stoppelement 7, und ein verformbarer Bereich 25 zwischen den beiden Befestigungsbereichen 21, 22.

Mit dem ersten Befestigungsbereich 21 ist das Verbindungselement 8 gegen die Rückseite 4A der als Profil ausgebildeten hinteren Stütze 4 befestigt, oder alternativ gegen das hintere Tragprofil 10. Die Befestigung erfolgt z. B. durch eine Verschraubung 26, wozu der erste Befestigungsbereich 21 eine Öffnung mit horizontaler Öffnungsachse aufweist, die mit einer der Öffnungen in dem Lochraster der Stütze 4 in Fluchtung gebracht wird, bevor eine Schraube 26 oder ein Stift, Bolzen, Niet etc. als Befestigungselement hindurchgesteckt wird.

Der zweite Befestigungsbereich 22 des Verbindungselements 8 ist hingegen im Wesentlichen horizontal angeordnet. Er ist flächig auf der Oberseite 7A und/oder der Unterseite des hier als ein Vierkantprofil ausgebildeten Stoppelements 7 abgestützt. Der zweite Befestigungsbereich 22 ist mit einer Öffnung mit vertikaler Öffnungsachse versehen. Durch die Öffnung sowie durch eine dazu fluchtende Öffnung in der Oberseite 7A des Stoppelements 7 ist eine Schraube 28, ein Stift, ein Niet, ein Bolzen oder ein vergleichbares Befestigungselement hindurchsteckbar.

Zwischen den beiden Befestigungsbereichen 21, 22 ist das Verbindungselement 8 mit dem stoßabsorbierenden, verformbaren Bereich 25 versehen. Dieser ist in Seitenansicht in etwa S-förmig gestaltet aus einem ersten Biegeabschnitt 31 in Form einer nach unten offenen Schale oder Rinne, und einem darauffolgenden zweiten Biegeabschnitt 32 in Form einer nach oben offenen Schale oder Rinne. Infolge dieser Gestaltung aus Biegeabschnitten 31, 32 mit gegensinnigen Biegeverläufen ist Bestandteil des verformbaren Bereichs 25 mindestens ein sich quer zu der Ein- und Auslagerrichtung L erstreckender Abschnitt 27. Der Abschnitt 27 ist hier ein vertikal sich erstreckender Abschnitt des verformbaren Bereichs 25. Ebenso kann der Abschnitt 27 aber auch schräg zur Ein- und Auslagerrichtung L angeordnet sein. Die Gestaltung des verformbaren Bereichs 25 aus Biegeabschnitten 31, 32 mit zueinander gegensinnigen Biegeverläufen und unter Ausbildung mindestens eines quer oder schräg verlaufenden Abschnitts 27 führt zu einer Stoßbelastungen gut aufnehmenden bzw. dämpfenden Nachgiebigkeit.

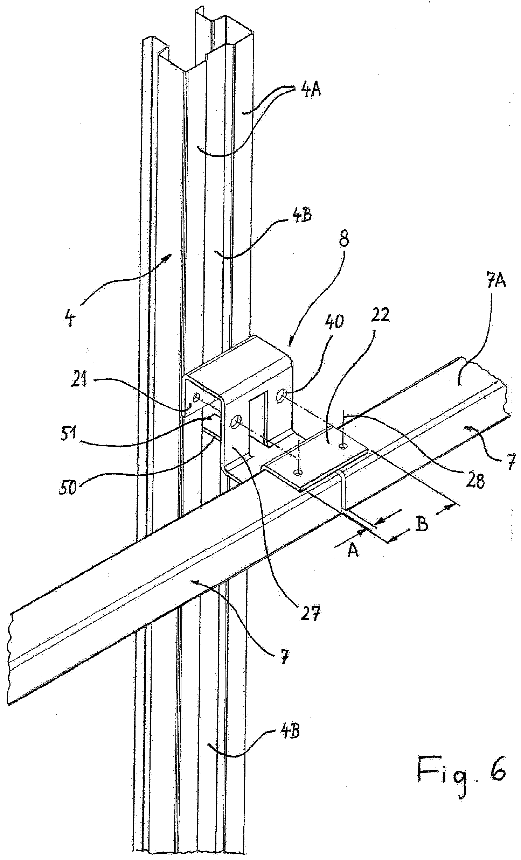

Gemäß der Draufsicht Figur 4 setzt sich der zweite Befestigungsbereich 22 aus zwei in derselben Ebene nebeneinander angeordneten Befestigungszonen 22A, 22B zusammen. In der ersten Befestigungszone 22A ist ein erstes Stoppelement 7 befestigt, in der daneben angeordneten zweiten Befestigungszone 22B kann ein zweites, baugleiches Stoppelement befestigt werden. Die Verbindung erfolgt wie bereits beschrieben über Schrauben 28, Stifte oder Bolzen mit vertikaler Achse. Zwar kommt es bei einem Stoß auf das eine Stoppelement 7 über das sich dann plastisch streckende Verbindungselement 8 auch zu einem Mitnehmen des jeweils anderen Stoppelements, jedoch ohne eine Übertragung horizontaler Biegekräfte von dem einen auf das andere Stoppelement, was zu Schäden am jeweils anderen Stoppelement führen könnte. Hierzu ist von Vorteil, wenn zwischen den beiden Stoppelementen 7 ein Abstand A besteht, wie in Fig. 6 eingezeichnet.

Für einen leicht und schnell zu bewerkstelligenden Austausch eines Verbindungselements 8 erfolgt die Montage des ersten Befestigungsbereichs 21 an der Rückseite 4A der Stütze 4 über zwei nebeneinander auf gleicher Höhe angeordnete Verschraubungen 26. Um von außen gut an die Verschraubungen 26 bzw. Stiftverbindungen zu gelangen, ist der quer zur Ein- und Auslagerrichtung L verlaufende Abschnitt 27 in Verlängerung der Verschraubung 26 bzw. Verstiftung mit einer Montageöffnung 40 versehen. Diese ist, ebenso wie die anderen Öffnungen, durch Lochstanzen des Blechformteils herstellbar. Durch jede Montageöffnung 40 lässt sich ein Schraubwerkzeug horizontal hindurchführen, um so auf einfache Weise an die dahinter angeordnete Verschraubung 26 zu gelangen.

Vorzugsweise ist, wie Figur 3 erkennen lässt, die Montageöffnung 40 höher angeordnet als der zweite Befestigungsbereich 22.

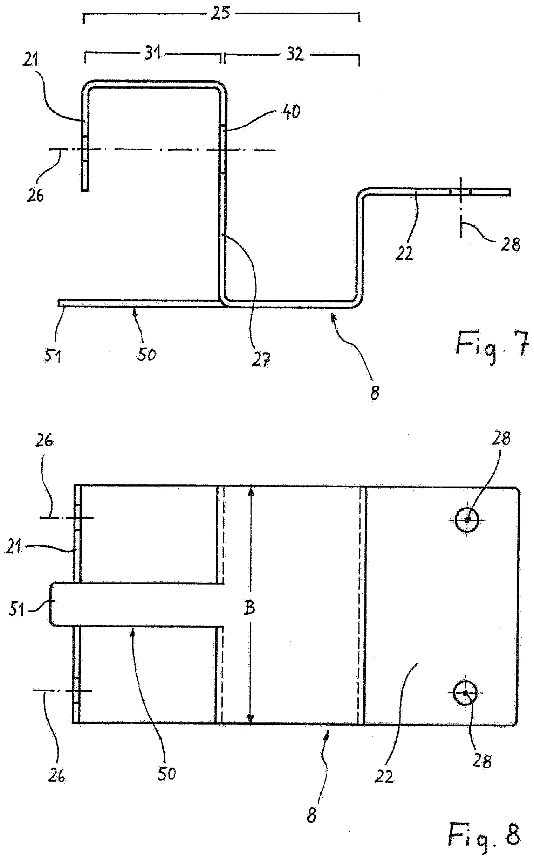

Bei der zweiten Ausführungsform nach den Figuren 6 - 8 ist das Verbindungs- und Dämpfungselement 8, durch ein teilweises Ausstanzen des Blechmaterials im Bereich des vertikalen Abschnitts 27, mit einer Lasche 50 versehen. Die Lasche 50 befindet sich auf der Mitte der Breite B des Elements 8. Das freie Ende 51 der Lasche erstreckt sich zu einer vertikal angeordneten Fläche 4B an der hinteren Stütze 4 hin. Vorzugsweise ist dieses freie Ende 51 gegen die vertikal angeordnete Fläche 4B abgestützt, ohne mit der Fläche 4B verbunden zu sein.

Durch die an dem Element 8 angeformte Lasche 50 kommt es zu einer zusätzlichen Abstützung gegen die Stütze 4, wodurch ein Auf- und Abschwingen der Stoppelemente 7 sowie Vibrationen der Stoppelemente 7 vermieden werden.

Gemäß Fig. 6 ist die hintere Stütze 4 als ein Profil ausgebildet, und die Fläche 4B ist als eine sich in Profillängsrichtung erstreckende Einsenkung bzw. Vertiefung in der Rückseite des Profils ausgebildet. Zu beiden Seiten dieser nutförmigen Einsenkung 4B weist die Stütze 4 Flächenbereiche 4A auf, gegen die der erste Befestigungsbereich 21 des Verbindungselements 8 befestigt ist, wie voranstehend für die Ausführungsform Fign. 1 - 5 bereits erläutert.

Zur Vermeidung eines Auf- und Abschwingens der Stoppelemente befindet sich das freie Ende 51 der Lasche 50 tiefer als der Befestigungsbereich 21. Die durch die Lasche 50 erzielte, zusätzliche Abstützung hat keinerlei negativen Einfluss auf die Eigenschaft des Elements 8, Kräfte, die normalerweise zu einer Schädigung des Regals führen könnten, als Verformung aufzunehmen, indem das Element 8 eine plastische Streckung erfährt.

Durch das Eingreifen der Lasche 50 in die nutförmige Einsenkung 4B wird auch eine seitliche Verriegelung erzielt, und ein Hin- und Herschwingen der Stoppelemente 7 in horizontaler, seitlicher Richtung unterbunden.

### Bezugszeichenliste

- 1: vordere Stütze
- 2: vordere Traverse
- 3: hintere Traverse
- 4: hintere Stütze
- 4A: Rückseite
- 4B: vertikal angeordnete Fläche, Einsenkung
- 5: Verstärkungsstrebe
- 7: Stoppelement
- 7A: Oberseite
- 8: Verbindungselement, Dämpfungselement
- 10: Tragprofil
- 11: Auflage, Oberseite des Auflageprofils
- 21: erster Befestigungsbereich
- 22: zweiter Befestigungsbereich
- 22A: Befestigungszone
- 22B: Befestigungszone
- 25: verformbarer Bereich
- 26: Verschraubung, Schraube
- 27: Abschnitt
- 28: Verschraubung, Schraube
- 31: Biegeabschnitt
- 32: Biegeabschnitt
- 40: Montageöffnung
- 50: Lasche
- 51: freies Ende

- A: Abstand
- B: Breite
- L: Längsrichtung, Ein- und Auslagerrichtung
- P: Transportpalette

## Patentansprüche

1. Lagerregal zur Aufnahme quaderförmiger Stückgüter wie z. B. beladener Normpaletten oder Normcontainer, mit vorderen und hinteren vertikalen Stützen (1, 4), sich über die Regaltiefe erstreckenden Lagergassen, die zur Bereitstellung von Auflagen (11) für die Stückgüter mit mindestens zwei zueinander parallel angeordneten, horizontalen Tragprofilen (10) versehen sind, Stoppelementen (7) an den den Ein- und Auslagerenden abgewandten Enden der Lagergassen, wobei sich die Stoppelemente (7) in einer Ebene über der Ebene der Auflagen (11) befinden, wobei die Stoppelemente (7) über Verbindungselemente (8) an den hinteren Stützen (4) und/oder den Tragprofilen (10) befestigt sind,
**dadurch gekennzeichnet, dass** die Verbindungselemente (8) in Längsrichtung der Lagergassen nachgiebig verformbar ausgebildet sind, dass jedes Verbindungselement (8) ein Blechformteil ist, an dem einstückig ausgebildet sind
- ein erster Befestigungsbereich (21) zur starren Verbindung mit der Stütze (4) bzw. dem Tragprofil (10),
- ein zweiter Befestigungsbereich (22) zur starren Verbindung mit dem Stoppelement (7),
- ein verformbarer Bereich (25) zwischen den beiden Befestigungsbereichen (21, 22), wobei der verformbare Bereich (25) mindestens einen sich quer oder schräg zur Ein- und Auslagerrichtung (L) erstreckenden Abschnitt (27) umfasst,
dass der zweite Befestigungsbereich (22) im Wesentlichen horizontal angeordnet ist, und dass sich der zweite Befestigungsbereich (22) aus zwei horizontal nebeneinander angeordneten Befestigungszonen (22A, 22B) zusammensetzt, von denen die erste Befestigungszone (22A) mit einem ersten, und die zweite Befestigungszone (22B) mit einem zweiten Stoppelement (7) verschraubt oder verstiftet ist.

2. Lagerregal nach Anspruch 1, **dadurch gekennzeichnet, dass** das Stoppelement (7) ein horizontales und sich quer zu der Lagergasse erstreckendes Profilelement ist.

3. Lagerregal nach Anspruch 1, **dadurch gekennzeichnet, dass** der erste Befestigungsbereich (21) zu seiner Befestigung an der Stütze (4) vertikal angeordnet ist.

4. Lagerregal nach Anspruch 3, **dadurch gekennzeichnet, dass** der erste Befestigungsbereich (21) an der Rückseite (4A) der hinteren Stütze (4) befestigt ist.

5. Lagerregal nach einem der vorhergehenden Ansprüche, **dadurch gekennzeichnet, dass** der zweite Befestigungsbereich (22) an der Ober- oder Unterseite des Stoppelements (7) befestigt ist.

6. Lagerregal nach einem der vorhergehenden Ansprüche, **dadurch gekennzeichnet, dass** sich der zwischen den Befestigungsbereichen (21, 22) angeordnete, verformbare Bereich (25) aus Biegeabschnitten (31, 32) mit zueinander gegensinnigen Biegeverläufen zusammensetzt.

7. Lagerregal nach Anspruch 6, **dadurch gekennzeichnet, dass** ein erster Biegeabschnitt (31) als eine nach unten offene Schale, und ein darauffolgender zweiter Biegeabschnitt (32) als eine nach oben offene Schale geformt ist.

8. Lagerregal nach einem der vorhergehenden Ansprüche, **dadurch gekennzeichnet, dass** der erste Befestigungsbereich (21) mit der hinteren Stütze (4) verschraubt oder verstiftet ist, und dass der Abschnitt (27) in Verlängerung zu der Verschraubung bzw. Verstiftung mit einer Montageöffnung (40) versehen ist.

9. Lagerregal nach einem der vorhergehenden Ansprüche, **dadurch gekennzeichnet, dass** an dem Verbindungselement (8) einstückig eine Lasche (50) ausgebildet ist, deren freies Ende (51) einer vertikal angeordneten Fläche (4B) an der hinteren Stütze oder an dem Tragprofil gegenüberliegt.

10. Lagerregal nach Anspruch 9, **dadurch gekennzeichnet, dass** das freie Ende (51) der Lasche (50) gegen die vertikal angeordnete Fläche (4B) abgestützt ist.

11. Lagerregal nach Anspruch 9, **dadurch gekennzeichnet, dass** das freie Ende (51) der Lasche (50) der vertikal angeordneten Fläche (4B) mit geringem Abstand gegenüberliegt.

12. Lagerregal nach einem der Ansprüche 9 - 11, **dadurch gekennzeichnet, dass** die hintere Stütze (4) als ein Profil ausgebildet ist, dass die vertikal angeordnete Fläche eine sich in Profillängsrichtung erstreckende Einsenkung (4B) in der Rückseite des Profils ist, und dass das Profil zu beiden Seiten der Einsenkung (4B) Flächenbereiche (4A) aufweist, gegen die der erste Befestigungsbereich (21) des Verbindungselements (8) befestigt ist.

13. Lagerregal nach einem der Ansprüche 9 - 12, **dadurch gekennzeichnet, dass** das freie Ende (51) der Lasche (50) unterhalb des Befestigungsbereichs (21) angeordnet ist.

14. Lagerregal nach einem der Ansprüche 9 - 13, **dadurch gekennzeichnet, dass** die Lasche (50) ein ausgestanzter Abschnitt des Blechformteils ist, aus dem das Verbindungselement (8) besteht.

## Claims

1. Storage rack for accommodating cuboid-shaped piece goods, such as for example loaded standard pallets or standard containers, with front and rear vertical support elements (1, 4), storage lanes extending over the rack depth and which are provided with at least two horizontal profiled supporting elements (10) which are arranged parallel to one another for forming supports (11) for the piece goods, stop elements (7) at the ends of the storage lanes facing way from the placement-into-storage and removal-from-storage ends, wherein the stop elements (7) are located at a level above the level of the supports (11), wherein the stop elements (7) are fastened on the rear support elements (4) and/or on the profiled supporting elements (10) by way of connecting elements (8),
**characterized in that** the connecting elements (8) are designed to be deformable in a yielding manner in the longitudinal direction of the storage lanes, **in that** each connecting element (8) is a shaped sheet-metal part on which are formed integrally
- a first fastening region (21) for rigidly connecting with the support element (4) and/or profiled supporting element (10),
- a second fastening region (22) for rigidly connecting with the stop element (7),
- a deformable region (25) between the two fastening regions (21, 22), wherein the deformable region (25) comprises at least one section (27) which extends transversely or inclined to the placement-into-storage and removal-from-storage direction (L),
**in that** the second fastening region (22) is arranged substantially horizontally, and **in that** the second fastening region (22) is comprised of two fastening zones (22A, 22B) which are arranged horizontally next to one another, of which the first fastening zone (22A) is screwed or riveted to a first stop element (7) and the second fastening zone (22B) is screwed or riveted to a second stop element (7).

2. Storage rack according to Claim 1, **characterized in that** the stop element (7) is a horizontal profiled element extending transversely to the storage lane.

3. Storage rack according to Claim 1, **characterized in that** the first fastening region (21) is arranged vertically for fastening thereof on the support element (4).

4. Storage rack according to Claim 3, **characterized in that** the first fastening region (21) is fastened to the rear side (4A) of the rear support element (4).

5. Storage rack according to one of the preceding claims, **characterized in that** the second fastening region (22) is fastened on the upper side or underside of the stop element (7).

6. Storage rack according to one of the preceding claims, **characterized in that** the deformable region (25) which is arranged between the fastening regions (21, 22) is comprised of bending sections (31, 32) with mutually opposite bending profiles.

7. Storage rack according to Claim 6, **characterized in that** a first bending section (31) is formed as a downwardly open dish, and a following second bending section (32) is formed as an upwardly open dish.

8. Storage rack according to one of the preceding claims, **characterized in that** the first fastening region (21) is screwed or riveted to the rear support element (4), and **in that** the section (27) is provided with an assembly opening (40) as an elongation of the screw fitting or rivet connection.

9. Storage rack according to one of the preceding claims, **characterized in that** a bracket plate (50) is formed in one piece on the connecting element (8) and its free end (51) is opposite a vertically arranged surface (4B) on the rear support element or on the profiled supporting element.

10. Storage rack according to Claim 9, **characterized in that** the free end (51) of the bracket plate (50) is supported against the vertically arranged surface (4B) .

11. Storage rack according to Claim 9, **characterized in that** the free end (51) of the bracket plate (50) is situated at a slight distance opposite the vertically arranged surface (4B).

12. Storage rack according to one of Claims 9 - 11, **characterized in that** the rear support element (4) is configured as a profile, **in that** the vertically arranged surface is an indentation (4B) extending in the profile longitudinal direction in the rear side of the profile, and **in that** the profile has on each side of the indentation (4B) flat surface areas (4A) against which the first fastening region (21) of the connecting element (8) is fastened.

13. Storage rack according to one of Claims 9 - 12, **characterized in that** the free end (51) of the bracket plate (50) is arranged underneath the fastening region (21).

14. Storage rack according to one of Claims 9 - 13, **characterized in that** the bracket plate (50) is a stamped-out section of the shaped sheet-metal part which constitutes the connecting element (8).

## Revendications

1. Rayonnage d'entrepôt destiné à recevoir des produits au détail de forme parallélépipédique, comme par exemple des palettes normalisées ou des conteneurs normalisés chargés, ledit rayonnage comprenant des montants verticaux avant et arrière (1, 4), des voies d'entrepôt qui s'étendent sur la profondeur du rayonnage et qui sont pourvues d'au moins deux profilés porteurs (10) horizontaux, disposés parallèlement les uns par rapport aux autres, afin de fournir des appuis (11) au produits au détail, des éléments d'arrêt (7) aux extrémités des voies d'entrepôt qui sont opposées aux extrémités d'entrée et de sortie de produits, les éléments d'arrêt (7) se trouvant dans un plan situé au-dessus du plan des appuis (11), les éléments d'arrêt (7) étant fixés par l'intermédiaire d'éléments de liaison (8) aux montants arrière (4) et/ou aux profilés porteurs (10), **caractérisé en ce que** les éléments de liaison (8) sont conçus pour être déformables élastiquement dans la direction longitudinale des voies d'entrepôt, **en ce que** chaque élément de liaison (8) est une pièce moulée en tôle au niveau de laquelle sont formées d'une seule pièce
- une première zone de fixation (21) destinée à être reliée rigidement au montant (4) ou au profilé (10),
- une deuxième zone de fixation (22) destinée à être reliée rigidement à l'élément d'arrêt (7),
- une zone déformable (25) située entre les deux zones de fixation (21, 22), la zone déformable (25) comprenant au moins un segment (27) s'étendant transversalement ou obliquement par rapport à la direction d'entrée et de sortie de produits (L),
**en ce que** la deuxième zone de fixation (22) est disposée sensiblement horizontalement et **en ce que** la deuxième zone de fixation (22) comprend deux zones de fixation (22A, 22B) qui sont disposées horizontalement l'une à côté de l'autre et dont la première zone de fixation (22A) est vissée ou goupillée à un premier élément d'arrêt et dont la deuxième zone de fixation (22B) est vissée ou goupillée à un deuxième élément d'arrêt (7).

2. Rayonnage d'entrepôt selon la revendication 1, **caractérisé en ce que** l'élément d'arrêt (7) est un élément profilé s'étendant horizontalement et transversalement à la voie d'entrepôt.

3. Rayonnage d'entrepôt selon la revendication 1, **caractérisé en ce que** la première zone de fixation (21) est disposée verticalement afin d'être fixée au montant (4) .

4. Rayonnage d'entrepôt selon la revendication 3, **caractérisé en ce que** la première zone de fixation (21) est fixée à la face arrière (4A) du montant arrière (4).

5. Rayonnage d'entrepôt selon l'une des revendications précédentes, **caractérisé en ce que** la deuxième zone de fixation (22) est fixée à la face supérieure ou inférieure de l'élément d'arrêt (7).

6. Rayonnage d'entrepôt selon l'une des revendications précédentes, **caractérisé en ce que** la zone déformable (25), disposée entre les zones de fixation (21, 22), se composent de segments de pliage (31, 32) pourvus de tracés de pliage dans des sens opposés.

7. Rayonnage d'entrepôt selon la revendication 6, **caractérisé en ce qu'**un premier segment de pliage (31) est formé comme une coque ouverte vers le bas et un deuxième segment de pliage (32), faisant suite au précédent, est formé comme une coque ouverte vers le haut.

8. Rayonnage d'entrepôt selon l'une des revendications précédente, **caractérisé en ce que** la première zone de fixation (21) est vissée ou goupillée au montant arrière (4) et **en ce que** le segment (27) est muni d'un orifice de montage (40) dans le prolongement du vissage ou du goupillage.

9. Rayonnage d'entrepôt selon l'une des revendications précédentes, **caractérisé en ce qu'**une patte (50), dont l'extrémité libre (51) est située en regard d'une surface (4B) disposée verticalement sur le montant arrière ou le profilé porteur, est conçue d'une seule pièce sur l'élément de liaison (8).

10. Rayonnage d'entrepôt selon la revendication 9, **caractérisé en ce que** l'extrémité libre (51) de la patte (50) s'appuie contre la surface (4B) disposée verticalement.

11. Rayonnage d'entrepôt selon la revendication 9, **caractérisé en ce que** l'extrémité libre (51) de la patte (50) est placée à faible distance en regard de la surface (4B) disposée verticalement.

12. Rayonnage d'entrepôt selon l'une des revendications 9 à 11, **caractérisé en ce que** le montant arrière (4) est conçu sous la forme d'un profilé, **en ce que** la surface disposée verticalement est une dépression (4B) qui s'étend dans la direction longitudinale du profilé et qui est ménagée dans la face arrière du profilé, et **en ce que** le profilé comporte, des deux côtés de la dépression (4B), des zones de surface (4A) contre lesquelles est fixée la première zone de fixation (21) de l'élément de liaison (8).

13. Rayonnage d'entrepôt selon l'une des revendications 9 à 12, **caractérisé en ce que** l'extrémité libre (51) de la patte (50) est disposée au-dessous de la zone de fixation (21).

14. Rayonnage d'entrepôt selon l'une des revendications 9 à 13, **caractérisé en ce que** la patte (50) est un segment découpé de la pièce moulée en tôle dont l'élément de liaison (8) est constitué.
